# EUROPEAN PATENT APPLICATION

(11) **EP 4 546 546 A1**
(43) Date of publication of application: **30.04.2025**
(21) Application number: 24189586.1
(22) Date of filing: 18.07.2024
(51) Int. Cl.: H01M 50/474, H01M 50/477, H01M 50/55, H01M 50/103, H01M 10/04, H01M 50/15, H01M 50/176, H01M 50/342, H01M 50/531, H01M 50/553, H01M 50/486

(54) **SECONDARY BATTERY**

(30) Priority: 27.10.2023 KR 20230145785
(71) Applicant: SAMSUNG SDI CO., LTD., Giheung-gu Yongin-si, Gyeonggi-do 17084 (KR)
(72) Inventor: BAE, Chae Eun, 17084 Yongin-si (KR); YONG, Jun Sun, 17084 Yongin-si (KR); BAE, Kwang Soo, 17084 Yongin-si (KR); LEE, Jun Hyung, 17084 Yongin-si (KR); KIM, Ji Hwan, 17084 Yongin-si (KR); ROH, Heyoung Cheoul, 17084 Yongin-si (KR)
(74) Representative: Marks & Clerk LLP

(57) **Abstract**

A secondary battery includes an electrode assembly including a first electrode plate and a second electrode plate, a case for accommodating the electrode assembly, and having one open side, a cap plate coupled to the case at the one open side, a first terminal and a second terminal electrically connected to the electrode assembly, and coupled to the cap plate, and a lower insulator at a lower portion of the electrode assembly, located between the electrode assembly and another side of the case that faces the cap plate in a longitudinal direction, and including an inclined part corresponding to a direction of the electrode assembly on at least one edge of an upper end of the lower insulator.

## Description

### BACKGROUND

### 1. Field

Aspects of embodiments relate to a secondary battery.

### 2. Description of the Related Art

Secondary batteries are rechargeable, unlike primary batteries. In secondary batteries, a low capacity battery including a battery cell in the form of a pack may be used in portable small electronic devices, such as smartphones and digital cameras. A high capacity battery module, which may include tens to hundreds of battery packs connected to each other, may be used as a power source for driving motors (e.g., driving motors of hybrid vehicles, electric vehicles, and the like).

A rechargeable secondary battery includes an electrode assembly, in which a separator is interposed between a positive electrode plate and a negative electrode plate, a current collector plate electrically connected to the electrode assembly, a terminal electrically connected to the current collector plate, a case accommodating the electrode assembly and the current collector plate, and a cap plate, which blocks the case, and through which the terminal passes to be coupled.

The above-described information disclosed in the technology that serves as the background of the present disclosure is only for improving understanding of the background of the present disclosure, and may include information that does not constitute the related art.

### SUMMARY

Embodiments of the present disclosure provide a secondary battery that is improved in terms of stability by being configured to support an electrode assembly, and by being configured to allow gas ventilation.

The aspects of the present disclosure are not limited to the above-described limitations, and other problems not mentioned can be clearly understood by those skilled in the art from the description below.

According to one or more embodiments of the present disclosure, a secondary battery includes an electrode assembly including a first electrode plate and a second electrode plate, a case for accommodating the electrode assembly, and having one open side, a cap plate coupled to the case at the one open side, a first terminal and a second terminal electrically connected to the electrode assembly, and coupled to the cap plate, and a lower insulator at a lower portion of the electrode assembly, located between the electrode assembly and another side of the case that faces the cap plate in a longitudinal direction, and including an inclined part corresponding to a direction of the electrode assembly on at least one edge of an upper end of the lower insulator.

The inclined part of the lower insulator may be inclined from the upper end toward a lower end of the lower insulator so that an upper end surface of the lower insulator has a planar area that is less than that of a lower end surface of the lower insulator.

The inclined part may be flat.

The inclined part may be positioned inwardly from an outer edge of the lower insulator.

The inclined part may include a stepped portion.

The lower insulator may have a rectangular plate shape including a pair of long sides, and a pair of short sides connected to the pair of the long sides, wherein the inclined part is on an edge of the pair of the long sides.

A central area of the lower insulator may define an opening, wherein a support part is on a surface of the lower insulator excluding the opening and the inclined part.

The support part may contact the electrode assembly.

A space may be defined between the electrode assembly and the lower insulator due to the inclined part.

An interior of the support part of the lower insulator may define an empty space.

A lower end surface of the support part of the lower insulator may define a groove.

The case may include another open side opposite the one open side in the longitudinal direction, wherein the secondary battery further includes a bottom plate coupled to the case at the other open side of the case.

The bottom plate may define a vent hole having a safety vent therein.

The lower insulator may define a vent through-hole corresponding to a position of the vent hole.

The vent through-hole may have a size that is greater than or equal to a size of the vent hole.

The first electrode plate and the second electrode plate may respectively include a first electrode tab and a second electrode tab in a direction of the cap plate, wherein the secondary battery further includes a first current collector plate and a second current collector plate respectively electrically coupled to the first electrode tab and the second electrode tab.

The first terminal may include a first terminal pillar coupled to one side of the cap plate, and a first terminal plate coupled to the first terminal pillar and exposed, wherein the second terminal includes a second terminal pillar coupled to another side of the cap plate, and a second terminal plate coupled to the second terminal pillar and exposed.

The first current collector plate may be interposed between the electrode assembly and the one side of the cap plate to electrically connect the first electrode tab to the first terminal, wherein the second current collector plate is interposed between the electrode assembly and the other side of the cap plate to electrically connect the second electrode tab to the second terminal.

The one side of the cap plate may define a first through-hole through which the first terminal pillar passes, and a first coupling hole to which a first insulating member is coupled to provide insulation from the first terminal, wherein the other side of the cap plate defines a second through-hole through which the second terminal pillar passes, and a second coupling groove to which a second insulating member is coupled to provide insulation from the second terminal.

The secondary battery may further include an upper insulator between the cap plate and the first and second current collector plates, and defining an opening through which the first terminal pillar and the second terminal pillar pass.

At least some of the above and other features of the invention are set out in the claims.

### BRIEF DESCRIPTION OF DRAWINGS

The accompanying drawings are included to provide a further understanding of the present disclosure, and are incorporated in and constitute a part of this specification. The drawings illustrate embodiments of the present disclosure and, together with the description, describe aspects and features of the present disclosure. In the drawings:
FIG. 1 is a perspective view of a secondary battery according to embodiments;
FIG. 2 is a cross-sectional view of the secondary battery according to embodiments;
FIG. 3 is a cross-sectional view of an electrode assembly of the secondary battery according to embodiments;
FIG. 4 is an exploded perspective view of the secondary battery according to embodiments;
FIG. 5 is a perspective view of a lower insulator of the secondary battery according to embodiments;
FIG. 6 is an enlarged right view of a portion of the lower insulator of the secondary battery according to embodiments;
FIG. 7 is an enlarged left view of a portion of a lower insulator of a secondary battery according to other embodiments; and
FIG. 8 is an enlarged cross-sectional view of a portion of a lower insulator of a secondary battery according to embodiments.

### DETAILED DESCRIPTION

While some example embodiments of the present disclosure are described herein to more completely explain the present disclosure to those skilled in the art, the following examples may be modified in various other forms. Embodiments of the present disclosure may be embodied in many different forms and are not to be construed as being limited to the embodiments set forth herein; rather, these embodiments are provided so that those skilled in the art may thoroughly understand the present disclosure. Rather, these embodiments are provided so that this disclosure will be thorough and complete, and will fully convey the embodiments of the present disclosure to those skilled in the art.

In some embodiments, in the following drawings, the thickness or size of components or layers may be exaggerated for convenience and clarity of description, and the same reference numerals in the drawings refer to the same elements. As used herein, the term "and/or" includes any and all combinations of one or more of the associated listed items. In this specification, it is also to be understood that if a member A is referred to as being connected to a member B, the member A may be directly connected to the member B or indirectly connected to the member B with one or more members C therebetween.

The terms used in this specification are for illustrative purposes of the present disclosure and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list.

As used herein, terms, such as "first," "second," etc. are used to describe various members, components, areas, layers, and/or portions. However, it is to be understood that the members, components, areas, layers, and/or portions should not be defined by these terms. The terms do not mean a particular order, up and down, or superiority, and are used for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below," "beneath," "lower," "above," "upper," and the like, may be used herein for ease of description to describe one element or feature's relationship to another element(s) or feature(s), referring to the figures. These spatially relative terms are intended for ease of comprehension of the present disclosure according to various process states or usage states of the present disclosure, and, thus, the present disclosure is not limited thereto. For example, if an element or feature shown in the drawings is turned, the element or feature described as "beneath" or "below" may change into "above" or "upper." Thus, the term "lower" may encompass the term "upper" or "below."

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

Unless otherwise defined, all terms (including technical and scientific terms) used herein have the same meaning as commonly understood by one of ordinary skill in the art. It is also to be understood that terms defined in commonly used dictionaries should be interpreted as having meanings consistent with the meanings in the context of the related art, and are expressly defined herein unless they are interpreted in an ideal or overly formal sense.

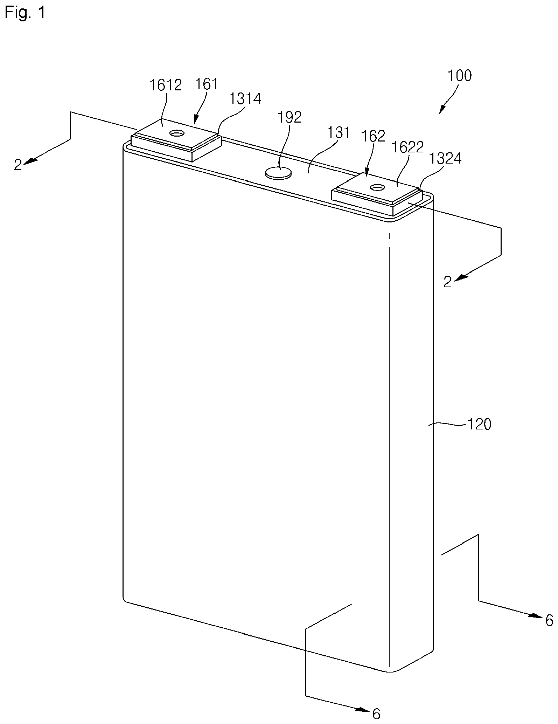

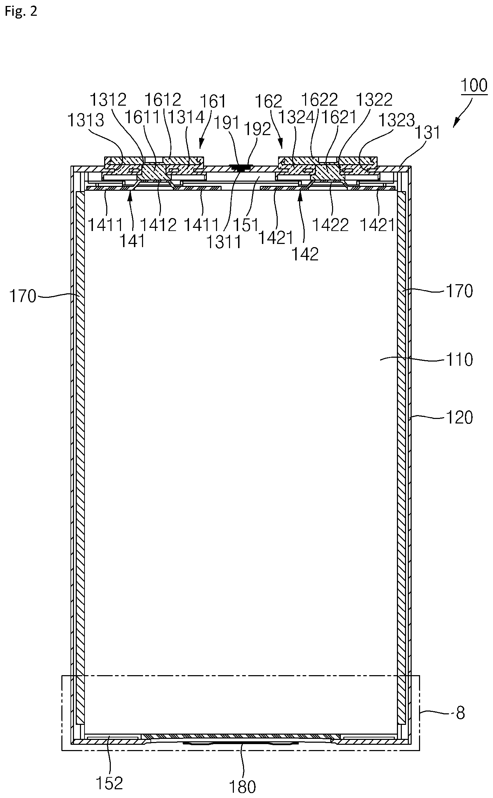

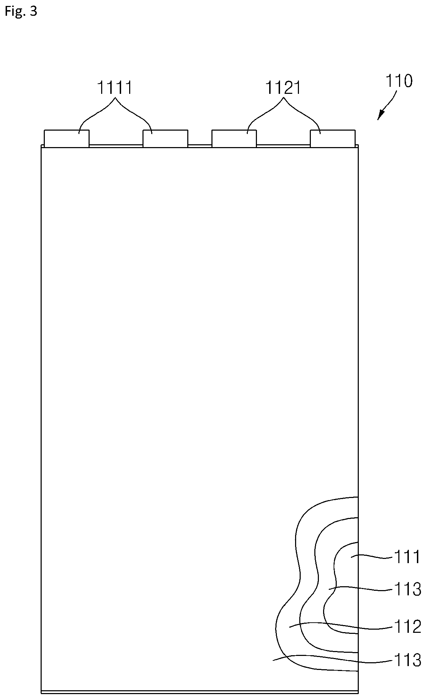

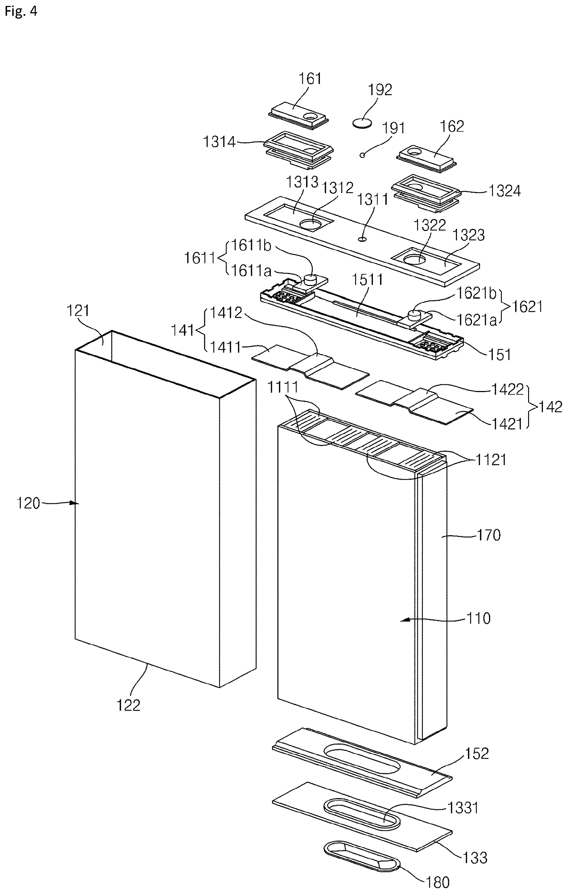

FIG. 1 is a perspective view of a secondary battery according to embodiments, FIG. 2 is a cross-sectional view of the secondary battery according to embodiments, FIG. 3 is a cross-sectional view of an electrode assembly of the secondary battery according to embodiments, and FIG. 4 is an exploded perspective view of the secondary battery according to embodiments. FIG. 2 illustrates a cross-sectional view taken along a line 2-2 in FIG. 1.

As illustrated in FIGS. 1 to 4, a secondary battery 100 according to one or more embodiments of the present disclosure may include an electrode assembly 110, a case 120, and a cap plate 131. In some embodiments, the secondary battery 100 according to one or more embodiments of the present disclosure may further include a first current collector plate 141 and a second current collector plate 142.

In some embodiments, the secondary battery 100 according to one or more embodiments of the present disclosure may further include an upper insulator 151 and a lower insulator 152, and also may further include a first terminal 161 and a second terminal 162. In some embodiments, the secondary battery 100 according to one or more embodiments of the present disclosure may further include a retainer 170, and also may further include a safety vent 180, a metal ball (e.g., a liquid injection hole metal ball) 191, and a plug (e.g., a liquid injection hole plug) 192.

The electrode assembly 110 may be provided in the form of a substantially rectangular hexahedral shape having a pair of long sides in a longitudinal direction, and a pair of short sides in the longitudinal direction. In some embodiments, a surface area of each of the long sides may be wider than that of each of the short sides. In some embodiments, the long side and/or the short side may have a length and a width. Here the length may be longer than the width. In some embodiments, the length may be about 200 mm to about 400 mm. In some embodiments, the electrode assembly 110 may include a first electrode plate 111 (e.g., a positive electrode plate), a second electrode plate 112 (e.g., a negative electrode plate), and a separator 113 between the first electrode plate 111 and a second electrode plate 112. In some embodiments, the first electrode plate 111 may include at least one first electrode tab 1111 (e.g., positive electrode tab) protruding to the outside (upper side) of the electrode assembly 110. The second electrode plate 112 may include at least one second electrode tab 1121 (e.g., negative electrode tab) protruding to the outside (e.g., upper side) of the electrode assembly 110.

In some embodiments, the electrode assembly 110 may include a first electrode tab 1111 provided on one end (for example, upper end) in the longitudinal direction, and a second electrode tab 1121 provided on the other end (for example, lower end) in the longitudinal direction. In some embodiments, the electrode assembly 110 may be a stack type, in which the first electrode plate 111, the separator 113, and the second electrode plate 112 are stacked. In some embodiments, the electrode assembly 110 may be a winding type, in which the first electrode plate 111, the separator 113, and the second electrode plate 112 are wound. In some embodiments, the electrode assembly 110 may include, or may be referred to as, an electrode group.

In some embodiments, the first electrode plate 111 may be provided by applying a first active material, such as transition metal oxide, to a first current collector made of metal foil, such as aluminium, and may include the first electrode tab 1111 (e.g., an area that is not coated with the first active material) extending and protruding toward the cap plate 131 of the first current collector. The first electrode tab 1111 extending and protruding in this manner may also be referred to as a first non-coating portion tab or a first base material tab. The first electrode tabs 1111 may be aligned at the same position through the stacking or winding process for manufacturing the electrode assembly 110 to provide a multi-tab. The first electrode tab 1111 may be electrically connected to the first terminal 161 to serve as a flow path through which current flows between the first electrode plate 111 and the first terminal 161.

In some embodiments, the second electrode plate 112 may be provided by applying a second active material, such as graphite or carbon, to a second current collector made of metal foil, such as copper or nickel, and may include the second electrode tab 1121 (e.g., an area that is not coated with the second active material) extending and protruding toward the cap plate 131 of the second current collector. The second electrode tab 1121 extending and protruding in this manner may also be referred to as a second non-coating portion tab or a second base material tab. The second electrode tabs 1121 may be aligned at the same position through the stacking or winding process for manufacturing the electrode assembly 110 to provide a multi-tab. The second electrode tab 1121 may be electrically connected to the second terminal 162 to serve as a flow path through which current flows between the second electrode plate 112 and the second terminal 162.

The separator 113 may be interposed between the first electrode plate 111 and the second electrode plate 112 to reduce or prevent the likelihood of a short circuit between the first electrode plate 111 and the second electrode plate 112, and to enable movement of lithium ions. The separator 113 may be slightly wider than the surface area of each of the first electrode plate 111 and the second electrode plate 112 to further protrude in an upward and downward direction and/or a left and right direction than each of the first electrode plate 111 and the second electrode plate 112. In some embodiments, the separator 113 may reduce or prevent the likelihood of the first electrode plate 111 and the second electrode plate 112 being in direct contact with the case 120, the cap plate 131, and/or the bottom plate 133 in the upward and downward direction and/or left and right direction of the electrode assembly 110.

In some embodiments, the electrode assembly 110 may be accommodated in the case 120 together with the electrolyte. In some embodiments, the electrolyte may include an organic solvent, such as ethylene carbonate (EC), propylene carbonate (PC), diethyl carbonate (DEC), ethylmethyl carbonate (EMC), and/or dimethyl carbonate (DMC), and lithium salt, such as LiPF₆ or LiBF₄. In some embodiments, the electrolyte may be liquid, solid, or gel.

The case 120 may accommodate the electrode assembly 110, and may define a first opening 121 and a second opening 122, which are respectively provided in both ends in the opposite longitudinal direction. The present disclosure is not limited to this, and the case 120 may have only the first opening 121 defined therein. In this case, the bottom plate 133 may be omitted. In some embodiments, the case 120 may be provided in the form of a substantially rectangular hexahedral shape having a pair of long sides in the longitudinal direction, and a pair of short sides in the longitudinal direction. In some embodiments, a surface area of each of the long sides may be greater than that of each of the short sides. In some embodiments, the long side and/or the short side may have a length and a width. Here the length may be longer than the width. In some embodiments, the length may be about 200 mm to about 400 mm. In some embodiments, the first opening 121 may be an upper opening defined by the pair of long sides and the pair of short sides, and the second opening 122 may be a lower opening defined by the pair of long sides and the pair of short sides. In some embodiments, the case 120 may include at least one welding line provided in the longitudinal direction of the short sides. In some embodiments, the case 120 may be provided by bending a flat metal plate into a hollow rectangular hexahedral shape, and by then laser welding ends to each other, such that the welding line may be provided. In some embodiments, the case 120 may be provided by extruding molten metal into an empty tube shape. In some embodiments, the case 120 may be manufactured in a deep drawing manner, and then may be cut at one side thereof to provide the case 120 with both sides opened. In some embodiments, the case 120 may be made of a conductive metal, such as aluminium, an aluminium alloy, or steel plated with nickel. In some embodiments, case 120 may include, or may be referred to as, a can. In some embodiments, the long side of the case 120 may be in close contact with the long side of the electrode assembly 110, and the short side of the case 120 may be in close contact with the short side of the electrode assembly 110.

The cap plate 131 may be provided in a substantially rectangular plate shape, and may be coupled to a first opening 121 of the case 120. In some embodiments, the cap plate 131 may close the first opening in the case 120, and may be laser welded to the case 120. In some embodiments, the cap plate 131 may include a liquid injection hole 1311 through which an electrolyte is injected. The liquid injection hole 1311 may be closed with a liquid injection hole metal ball 191 and a liquid injection hole plug 192.

In some embodiments, the first terminal 161 electrically coupled to the first electrode tab 1111 of the electrode assembly 110 may be insulated to pass through one side of the cap plate 131. In some embodiments, the second terminal 162 electrically coupled to the second electrode tab 1121 of the electrode assembly 110 may be insulated to pass through the other side of the cap plate 131. In some embodiments, the first terminal 161 or the second terminal 162 may be mechanically coupled (e.g., electrically short-circuited) to the cap plate 131, and may be provided to be integrated with the cap plate 131. In some embodiments, the cap plate 131 may be made of a conductive metal, such as aluminium, an aluminium alloy, or nickel-plated steel, and may also be referred to as a cap assembly in some cases.

The bottom plate 133 may be provided in a substantially rectangular plate shape, and may be coupled to the case 120 at the second opening 122 of the case 120. In some embodiments, the bottom plate 133 may close the second opening in the case 120, and may be laser welded to the case 120. In some embodiments, the bottom plate 133 may further include a vent hole 1331 into which the safety vent 180 is coupled. In some embodiments, the bottom plate 133 may be made of a conductive metal, such as aluminium, an aluminium alloy, or nickel-plated steel, and may also be referred to as a cap assembly in some cases.

The first current collector plate 141 may be interposed between the electrode assembly 110 and the cap plate 131. In some embodiments, the first current collector plate 141 may have a substantially rectangular plate shape. The first current collector plate 141 may electrically/mechanically couple the first electrode tab 1111 of the electrode assembly 110 to the first terminal 161. In some embodiments, the first current collector plate 141 may include a first current collector plate flat part 1411 welded (e.g., laser welded) to the first electrode tab 1111, and may include a first current collector plate protrusion 1412 welded (e.g., laser welded) to a first terminal plate 1612. In some embodiments, the first electrode tab 1111 of the electrode assembly 110 may be bent in one direction to facilitate the welding to the first current collector plate flat part 1411. In some embodiments, the first electrode tab 1111 may be bent and may be in close contact with a surface of the electrode assembly 110, such that the first electrode tab 1111 and the electrode assembly 110 may be pre-welded to each other. In some embodiments, a first terminal 161 may be pre-welded on a first current collector plate protrusion 1412. The first terminal pillar 1611 may include a first base 1611a welded on the first current collector plate protrusion 1412, and may include a cylindrical-type first protrusion 1611b protruding in a direction that is away from the first base 1611a. In some embodiments, the first current collector plate 141 may be made of a conductive metal, such as aluminium, an aluminium alloy, or nickel-plated steel, and may also be referred to as a current collector or sub plate.

The second current collector plate 142 may be interposed between the electrode assembly 110 and the cap plate 131. In some embodiments, the second current collector plate 142 may have a substantially rectangular plate shape. The second current collector plate 142 may electrically/mechanically couple the second electrode tab 1121 of the electrode assembly 110 to the second terminal 162. In some embodiments, the second current collector plate 142 may include a second current collector plate flat part 1421 welded (e.g., laser welded) to the second electrode tab 1121, and may include a second current collector plate protrusion 1422 welded (e.g., laser welded) to a second terminal plate 1622. In some embodiments, the second electrode tab 1121 of the electrode assembly 110 may be bent in one direction to facilitate the welding to the second current collector plate flat part 1421. In some embodiments, the second electrode tab 1121 may be bent, and may be in close contact with a surface of the electrode assembly 110, such that the second electrode tab 1121 and the electrode assembly 110 may be pre-welded to each other. In some embodiments, the second terminal 162 may be pre-welded on the second current collector plate protrusion 1422. The second terminal pillar 1621 may include a base 1621a welded on the second current collector plate protrusion 1422, and a cylindrical-type first protrusion 1621b protruding in a direction that is away from the base 1621a. In some embodiments, the second current collector plate 142 may be made of a conductive metal, such as copper, a copper alloy, nickel, a nickel alloy, or nickel-plated steel, and may also be referred to as a current collector or sub plate.

The upper insulator 151 may be interposed between the cap plate 131 and each of the first and second current collector plates 141 and 142. In some embodiments, the upper insulator 151 may have a substantially rectangular plate shape. In some embodiments, the upper insulator 151 may include an upper insulator opening 1511 through which the first current collector plate protrusion 1412 and the first terminal pillar 1611 of the first terminal 161, and the second current collector plate protrusion 1422 and the second terminal pillar 1621 of the second terminal 162, pass. The upper insulator opening 1511 may be defined in a central area of the upper insulator 151. The upper insulator 151 may reduce or minimize an empty space between the first current collector plate 141 and the cap plate 131, and if an external impact is applied to the secondary battery 100, the electrode assembly 110 may not move within the case 120. The upper insulator 151 may include polyethylene (PE), polypropylene (PP), double synthetic rubber (EPDM), or nylon, which does not react with the electrolyte.

The lower insulator 152 may be interposed between the electrode assembly 110 and the bottom plate 133. In some embodiments, the lower insulator 152 may be interposed between the electrode assembly 110 and a lower bottom of the case 120. In some embodiments, the lower insulator 152 may have a substantially rectangular plate shape. In some embodiments, the lower insulator 152 may provide a stepped portion by providing a rounded upper edge at a side of the electrode assembly 110, rather than a flat upper edge based on the rectangular plate shape. An upper edge portion of the lower insulator 152 might not contact the electrode assembly 110, but instead may be spaced apart from the electrode assembly 110 to provide a flow path through which a gas may move. In some embodiments, if the electrode assembly 110 is swelled and expanded, even if an internal space of the case 120 is insufficient, a flow path through which a gas moves between a space between the stepped portions may be provided to guide the gas to the safety vent 180. In some embodiments, if the swelling occurs in the electrode assembly 110, and if a gas is generated in the electrode assembly 110, a ventilation through which the gas moves to the safety vent 180 may be provided between the stepped portions, and the safety vent 180 may be exposed in the event of an explosion to provide stability. In some embodiments, the upper portion of the lower insulator 152 and the lower portion of the electrode assembly 110 might not contact each other to support the electrode assembly 110. The lower insulator 152 may reduce or minimize the empty space between the electrode assembly 110 and the bottom plate 133 to reduce or prevent movement of the electrode assembly 110 within the case 120 if the secondary battery 100 is externally impacted. The lower insulator 152 may include polyethylene (PE), polypropylene (PP), double synthetic rubber (EPDM), or nylon, which does not react with the electrolyte. More details of the lower insulator 152 will be described later.

The first terminal 161 may be coupled to pass through the cap plate 131. In some embodiments, the first terminal 161 may be coupled to one side of the cap plate 131. In some embodiments, the first terminal 161 may include a first terminal pillar 1611 and a first terminal plate 1612. A lower portion of the first terminal pillar 1611 may be welded to the first current collector plate protrusion 1412, and an upper portion of the first terminal pillar 1611 may be welded to the first terminal plate 1612.

In some embodiments, a first insulating member 1314 may be provided to insulate the first terminal pillar 1611 from the cap plate 131. In some embodiments, the cap plate 131 may include a first through-hole 1312 through which the first terminal pillar 1611 passes, and a first coupling groove 1313 provided around the first through-hole 1312. The first insulating member 1314 may be coupled to the first through-hole 1312 and the first coupling groove 1313 to insulate the first terminal pillar 1611 and the first terminal plate 1612 from the cap plate 131. In some embodiments, the first terminal pillar 1611 may pass through the first insulating member 1314, and the first terminal plate 1612 may be located on the first insulating member 1314 to insulate the first terminal 161 from the cap plate 131. In some embodiments, the first terminal 161 (e.g., the first terminal pillar 1611 and the first terminal plate 1612) may be made of a conductive metal, such as copper, a copper alloy, nickel, a nickel alloy, or nickel-plated steel. In some embodiments, the first insulating member 1314 may include PP, PE, or EPDM. In some embodiments, the first insulating member 1314 may be provided to be integrated with the cap plate 131 in a double injection manner.

The second terminal 162 may pass through the cap plate 131. In some embodiments, the second terminal 162 may be coupled to the other side of the cap plate 131. In some embodiments, the second terminal 162 may include a second terminal pillar 1621 and a second terminal plate 1622. A lower portion of the second terminal pillar 1621 may be welded to the second current collector plate protrusion 1422, and an upper portion of the second terminal pillar 1621 may be welded to the second terminal plate 1622.

In some embodiments, a second insulating member 1324 may be provided to insulate the second terminal pillar 1621 from the cap plate 131. In some embodiments, the cap plate 131 may include a second through-hole 1322 through which the second terminal pillar 1621 passes, and a second coupling groove 1323 provided around the second through-hole 1322. The second insulating member 1324 may be coupled to the second through-hole 1322 and the second coupling groove 1323 to insulate the second terminal pillar 1621 and the second terminal plate 1622 from the cap plate 131. In some embodiments, the second terminal pillar 1621 may pass through the second insulating member 1324, and the second terminal plate 1622 may be located on the second insulating member 1324 to insulate the second terminal 162 from the cap plate 131. In some embodiments, the second terminal 162 (e.g., the second terminal pillar 1621 and the second terminal plate 1622) may be made of a conductive metal, such as copper, a copper alloy, nickel, a nickel alloy, or nickel-plated steel. In some embodiments, the second insulating member 1324 may include PP, PE, or EPDM. In some embodiments, the second insulating member 1324 may be provided to be integrated with the cap plate 131 in a double injection manner. In some embodiments, the first terminal 161 and the second terminal 162 may be similar or the same in outer appearance. In some embodiments, heights of the first terminal 161 and the second terminal 162 may be similar or effectively the same. In some embodiments, each of the first insulating member 1314 and the second insulating member 1324 may be divided into upper and lower portions so as to be coupled to each other with the cap plate 131 therebetween.

The retainer 170 may be provided between the short side of the electrode assembly 110 and the short side of the case 120. The retainer 170 may have an approximately rectangular plate shape. In some embodiments, two retainers 170 may be provided on the two short sides of the electrode assembly 110, respectively. In some embodiments, the retainer 170 may reduce or minimize an empty space between the short side of the electrode assembly 110 and the short side of the case 120 to reduce or prevent movement of the electrode assembly 110 within the case 120 if an external impact is applied to the secondary battery 100. In some embodiments, the retainer 170 may include PP, PE, or EPDM.

In some embodiments, if only the first opening 121 is defined in the case 120, the safety vent 180 may be coupled to the vent hole 1331 defined in the other bottom surface of the case 120. In some embodiments, a thickness of the safety vent 180 may be less than that of the case 120, and the safety vent 180 may also be provided with a plurality of notches. The safety vent 180 may be ruptured if an internal pressure of the case 120 is greater than a reference pressure so that the internal pressure of the case 120 is similar to or equal to atmospheric pressure. The safety vent 180 may include aluminium or an aluminium alloy.

In some embodiments, if the case 120 has both the first opening 121 and the second opening 122, which are opened, the safety vent 180 may be coupled to the vent hole 1331 provided in the bottom plate 133. In some embodiments, a thickness of the safety vent 180 may be less than that of the bottom plate 133, and the safety vent 180 may also be provided with a plurality of notches. As described above, the safety vent 180 may be ruptured if the internal pressure of the case 120 is greater than the reference pressure so that the internal pressure of the case 120 is similar to or equal to the atmospheric pressure.

The liquid injection hole plug 192 may be coupled to the liquid injection hole 1311 of the cap plate 131. After the injection of the electrolyte is completed through the liquid injection hole 1311 of the cap plate 131, the liquid injection hole plug 192 may block the liquid injection hole 1311. In some embodiments, after the completion of the injection of the electrolyte, the liquid injection hole metal ball 191 having a diameter that is slightly larger than that of the liquid injection hole 1311 may be coupled to the liquid injection hole 1311, and then, the liquid injection hole plug 192 may be coupled to the liquid injection hole 1311 to reduce or prevent the likelihood of the electrolyte leaking. In some embodiments, hardness of the liquid injection hole metal ball 191 and the liquid injection hole plug 192 may be less than that of the cap plate 131, and the liquid injection hole metal ball 191 and the liquid injection hole plug 192 may be elastically deformed, and then may be coupled to the liquid injection hole 1311.

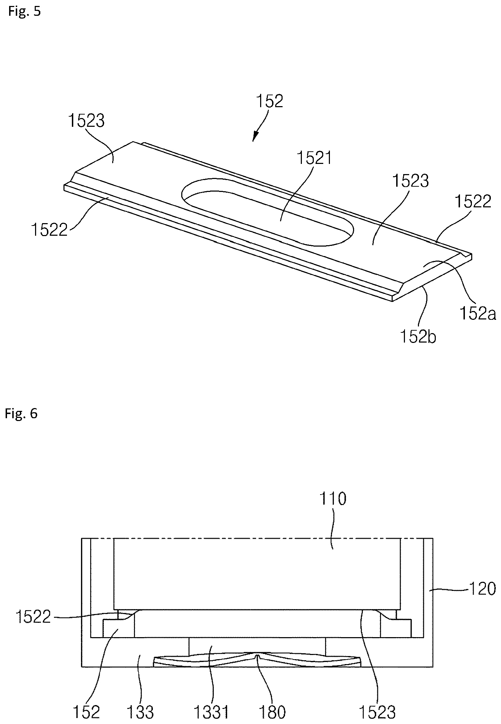

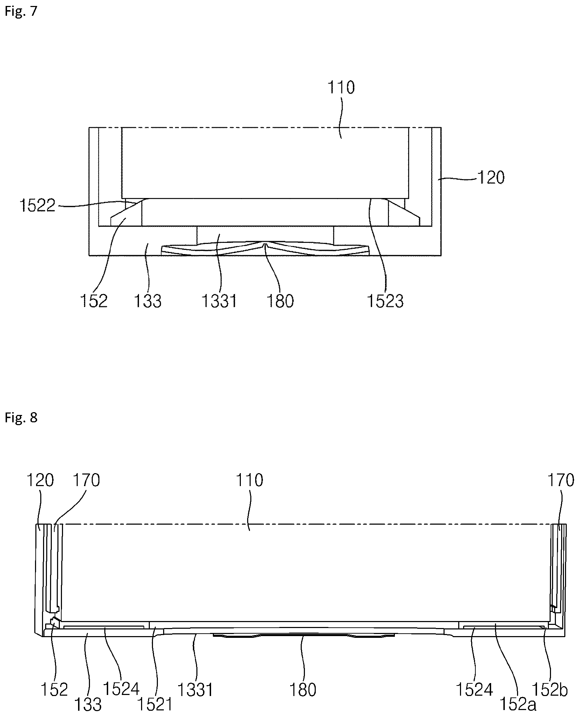

FIG. 5 is a perspective view of the lower insulator of the secondary battery according to embodiments, FIG. 6 is an enlarged right view of a portion of the lower insulator of the secondary battery according to embodiments, FIG. 7 is an enlarged left view of a portion of a lower insulator of a secondary battery according to other embodiments, and FIG. 8 is an enlarged cross-sectional view of a portion of a lower insulator of a secondary battery according to embodiments. FIG. 6 illustrates a cross-sectional view taken along a line 6-6 in FIG. 1. FIG. 8 illustrates an enlarged cross-sectional view of a portion 8 in FIG. 2.

The lower insulator 152 will be described with reference to FIGS. 5 to 8. As described above, the lower insulator 152 may be located at the lower portion of the electrode assembly 110, and may be interposed between the other side of the case 120, which faces the cap plate 131 in the longitudinal direction, and the electrode assembly 110. The lower insulator 152 may be constituted by a lower insulator upper end 152a at a side of the electrode assembly 110, and a lower insulator lower end 152b at a side of the bottom plate 133 or at the bottom surface the case 120.

As illustrated in FIG. 5, the lower insulator 152 may have a vent through-hole 1521 that passes from the lower insulator upper end 152a to the lower insulator lower end 152b. The vent through-hole 1521 may be defined in a central area of the lower insulator 152. In some embodiments, the vent through-hole 1521 may be defined to correspond to the position of the vent hole 1331. In some embodiments, if the swelling occurs in the electrode assembly 110, and if a gas is generated in the electrode assembly 110, the gas may move to the safety vent 180 through the vent through-hole 1521. In some embodiments, the shape of the vent through-hole 1521 is not limited, but may be provided in an oval shape corresponding to the shape of the vent hole 1331. In some embodiments, a size of the vent through-hole 1521 may be greater than or equal to that of the vent hole 1331.

In some embodiments, the lower insulator 152 may be provided in a rectangular plate shape constituted by a pair of long sides and a pair of short sides connected to the pair of long sides. In some embodiments, the pair of long and short sides of each of the lower insulator upper end 152a and the lower insulator lower end 152b may have a total of eight edges. In some embodiments, an inclined part 1522 may be located on at least one edge of the lower insulator upper end 152a. In some embodiments, an upper edge portion of the lower insulator 152 may be located on an edge at a side of each of the pair of long sides so that a flow path, through which the upper edge portion of the lower insulator 152 is spaced apart from the electrode assembly 110, and instead contacts the electrode assembly 110, may be provided to be longer.

As illustrated in FIGS. 5 and 6, the inclined part 1522 may have an inclined surface from the insulator upper end 152a toward the insulator lower end 152b so that an upper end surface has narrower planar area than that of a lower end surface with respect to a downward direction of the case 120. In some embodiments, a stepped portion may be provided on the inclined part 1522. In some embodiments, the inclined part 1522 may be provided so that the inclined surface is positioned inwardly from an outer edge of the lower insulator 152 (see FIG. 6). In some embodiments, the inclined part 1522 may be provided so that the inclined surface is substantially flat (see FIG. 7). The present disclosure is not limited to this, and the inclined part 1522 may be provided as at least two inclined surfaces.

As described above, the lower insulator 152 may have/define an opening in a central area (e.g., a vent through-hole 1521), and a support part 1523 may be located on the edge area, or surface, not including the vent through-hole 1521 or the inclined part 1522. The support part 1523 might not contact the electrode assembly 110. The support part 1523 may support the electrode assembly 110, and, for example, may support a separator 113 protruding downwardly from the electrode assembly 110. In some embodiments, the lower insulator 152 may support the electrode assembly 110 by the support part 1523, and may provide a flow path through a space defined between the electrode assembly 110 and the lower insulator 152 by the inclined part 1522.

As illustrated in FIG. 8, a lower insulator groove 1524 may be defined in a lower end of the support part 1523 of the lower insulator lower end 152b. In some embodiments, the inside of support part 1523 may be provided as an empty space to reduce a weight.

According to the present disclosure, the electrode assembly may be supported through the insulator located below the electrode assembly, and at the same time, the space between the electrode assembly and the lower insulator may be defined by the inclined part located on the edge of one side of the insulator to allow for swelling in the electrode assembly, and to allow the gas to move between the stepped portions if the gas is generated in the electrode assembly, thereby improving the stability of the battery.

The aspects that are capable of being achieved through the present disclosure are not limited to the above, and other aspects not mentioned can be clearly understood by those skilled in the art.

The above is merely one or more embodiments of the secondary battery, and the present disclosure is not limited to the foregoing embodiments. Also, it will be understood by those of ordinary skill in the art that various changes in form and details may be made therein without departing from the scope of the present disclosure, as defined by the following claims. It will be apparent to those skilled in the art that various changes and modifications may be made without departing from the scope of the present disclosure as defined in the following claims, with functional equivalents thereof to be included therein.

## Claims

1. A secondary battery comprising:
an electrode assembly comprising a first electrode plate and a second electrode plate;
a case for accommodating the electrode assembly, and having one open side;
a cap plate coupled to the case at the one open side;
a first terminal and a second terminal electrically connected to the electrode assembly, and coupled to the cap plate; and
a lower insulator at a lower portion of the electrode assembly, located between the electrode assembly and another side of the case that faces the cap plate in a longitudinal direction, and comprising an inclined part corresponding to a direction of the electrode assembly on at least one edge of an upper end of the lower insulator.

2. The secondary battery as claimed in claim 1, wherein the inclined part of the lower insulator is inclined from the upper end toward a lower end of the lower insulator so that an upper end surface of the lower insulator has a planar area that is less than that of a lower end surface of the lower insulator.

3. The secondary battery as claimed in claim 2, wherein the inclined part is flat.

4. The secondary battery as claimed in claim 2 or claim 3, wherein the inclined part is positioned inwardly from an outer edge of the lower insulator.

5. The secondary battery as claimed in claim 1 or claim 2, wherein the inclined part comprises a stepped portion.

6. The secondary battery as claimed in any one of claims 1 to 5, wherein the lower insulator has a rectangular plate shape comprising a pair of long sides, and a pair of short sides connected to the pair of the long sides, and
wherein the inclined part is on an edge of the pair of the long sides.

7. The secondary battery as claimed in any one of claims 1 to 6, wherein a central area of the lower insulator defines an opening, and
wherein a support part is on a surface of the lower insulator excluding the opening and the inclined part.

8. The secondary battery as claimed in claim 7, wherein:
(i) the support part contacts the electrode assembly; and/or
(ii) a space is defined between the electrode assembly and the lower insulator due to the inclined part.

9. The secondary battery as claimed in claim 7 or claim 8, wherein:
(i) an interior of the support part of the lower insulator defines an empty space; and/or
(ii) a lower end surface of the support part of the lower insulator defines a groove.

10. The secondary battery as claimed in any one of claims 1 to 9, wherein the case comprises another open side opposite the one open side in the longitudinal direction, and
wherein the secondary battery further comprises a bottom plate coupled to the case at the other open side of the case.

11. The secondary battery as claimed in claim 10, wherein the bottom plate defines a vent hole having a safety vent therein, optionally wherein the lower insulator defines a vent through-hole corresponding to a position of the vent hole, further optionally wherein the vent through-hole has a size that is greater than or equal to a size of the vent hole.

12. The secondary battery as claimed in any one of claims 1 to 11, wherein the first electrode plate and the second electrode plate respectively comprise a first electrode tab and a second electrode tab in a direction of the cap plate, and
wherein the secondary battery further comprises a first current collector plate and a second current collector plate respectively electrically coupled to the first electrode tab and the second electrode tab.

13. The secondary battery as claimed in claim 12, wherein the first terminal comprises a first terminal pillar coupled to one side of the cap plate, and a first terminal plate coupled to the first terminal pillar and exposed, and
wherein the second terminal comprises a second terminal pillar coupled to another side of the cap plate, and a second terminal plate coupled to the second terminal pillar and exposed.

14. The secondary battery as claimed in claim 13, wherein the first current collector plate is interposed between the electrode assembly and the one side of the cap plate to electrically connect the first electrode tab to the first terminal, and
wherein the second current collector plate is interposed between the electrode assembly and the other side of the cap plate to electrically connect the second electrode tab to the second terminal.

15. The secondary battery as claimed in claim 14, wherein:
(i) the one side of the cap plate defines a first through-hole through which the first terminal pillar passes, and a first coupling groove to which a first insulating member is coupled to provide insulation from the first terminal, and
wherein the other side of the cap plate defines a second through-hole through which the second terminal pillar passes, and a second coupling groove to which a second insulating member is coupled to provide insulation from the second terminal; and/or
(ii) the secondary battery further comprises an upper insulator between the cap plate and the first and second current collector plates, and defining an opening through which the first terminal pillar and the second terminal pillar pass.
